Europäisches Patentamt

(19) European Patent Office

Office européen des brevets

(11) Publication number: **0 081 867**
**A1**

## (12) EUROPEAN PATENT APPLICATION

(21) Application number: **82201414.8**

(22) Date of filing: **09.11.82**

(51) Int. Cl.³: **F 24 F 7/007,** F 24 F 3/00,
A 01 G 9/24

(30) Priority: **13.11.81 NL 8105138**

(71) Applicant: **Nivola B.V., Parklaan 158, NL-2171 EK Sassenheim (NL)**

(43) Date of publication of application: **22.06.83**
**Bulletin 83/25**

(72) Inventor: **Lestraden, Jacobus Wilhelmus, Nachtegaallaan 4, NL-2172 JR Sassenheim (NL)**

(84) Designated Contracting States: **AT BE CH DE FR GB IT LI LU NL SE**

(74) Representative: **Noz, Franciscus Xaverius, Ir. et al, Boschdijk 155 P.O. Box 645, NL-5600 AP Eindhoven (NL)**

(54) Method of circulating air in rooms.

(57) The invention relates to a method of circulating air in rooms employed for storing, drying and/or cultivating products, in which displacement of air can be created in the rooms with the aid of one or more ventilators, whereby periodically, within a very short lapse of time, that is to say, within a lapse of time of 4 seconds with the aid of the ventilator(s), at least an amount of air at the least equal to the capacity of the room to be treated is displaced in said room and subsequently no displacement of air is produced in said room for a fairly long time.

-1-

Methcd of circulating air in rooms.

The invention relates to a method of circulating air in rooms employed for storing, drying and/or cultivating products, in which air can be displaced in the room with the aid of one or more blowers or the like.

In rooms used, for example, for storing products such as cheese, for drying products such as bricks or for cultivating products such as plants it is desired to maintain the temperature and/or the humidity in the room, in particular near the products as far as possible within given limits. It is common practice to actuate the blowers for a fairly long period of time in dependence on temperature and/or humidity values measured at one or more points in the room in order to flush the room as thoroughly as possible by means of the uniform air stream produced by the blowers until at the measuring points concerned a given, desired value of temperature and/or humidity is measured, at which instant the blowers are switched off. The rate and the extent of refeeshment of the air surrounding an individual product to influence the temperature and/or the humidity may greatly differ from one product to the other also in dependence on the distance of the product concerned from the inlet point or the outlet point of the ciruclating air and/or on the resistance experienced by the air during circulation towards and from the product concerned respectively. Even when highly complicated air guiding means or the like are used, it is practically not possible in the conventional mode of ventilation, in which air rates are low to create optimum conditions at all products at the same time, also due to the complicated flow phenomena which may be caused by stands or the like supporting the products. It may occor, for example, that the degree of humidity is excessively reduced when the conventional, gradual ventilation method is used to eliminate an excess of humidity. This may adversely affect the product, since, for example, the outer layer of the product may run too dry and the humidity may not be able to. migrate sufficiently rapidly from inner parts of the product to the outer periphery in order to ensure uniform drying af the product as a whole within the desired limits. Consequently, the structure of the outer boundary of the product may be adversely affected by formation of peels which may occur in the product and so on. The same phenomenon may occur if, for example, it is desired to reduce the temperature at all places below a given value, since the temperature may then locally drop too drastically. Obviously this may result in dramatic variations of the nature of the products located in the same room, which, of course, is undesirable.

The invention has for its object to provide a method of circulating air in rooms, by which the disadvantages inherent in the method hitherto used can be eliminated.

According to the invention this can be achieved in that periodically, within a very short lapse of time, that is to say, a lapse of time of 4 seconds at least an amount of air at a minimum equal to the capacity of the room to be treated is displaced in the room with the aid of (a) ventilator(s) and subsequently no air displacement is caused in the room for a fairly long time.

Surprisingly it has been fonnd that by displacing a very high amount of air in the room within a very short time, so that the air stream rate along the products is high the desired, satisfactory air circulation at the location of substantially every product and hence the desired ambience around every product are created within a very short lapse of time.without an adverse effect of the high air rates on the products. By subsequently leaving the air unmoved for a longer time a given atmosphere with a given local temperature , humidity and the like will build up around each product, which atmosphere may have a composition differing from the local atmosphere of a product at a different point in the room. When after a fairly long period of time the air in the room is ,again drastically displaced transiently, this atmosphere around each product, is disturbed and the desired, uniform atmosphere created with the aid of an air-conditioning system operating independently of the ventilator(s) will re-establish throughout the room.

The air-conditioning system providing the desired temperature, refreshment of the air, the humidity and/or the $CO_2$ percentage has to be such that it causes at least practically no displacement of air in the proximity of the products.

In practice it has been found that a particularly effective circulation can be obtained when the ventilator(s) intended to cause the air to circulate in the room concerned has (have) a capacity such that with the aid thereof an amount of air equal to the capacity of the empty room can be displaced within 2 seconds. The rate of flow along the products will then be, in general, more than 2 ms/sec.

The lapse of time for which the ventilator(s) will continuously operate to create the desired circulation will, in general, not exceed 2 to 4 seconds. In dependence on the products located in the room and on the required circulation for these products, the period of rest may vary between 56 seconds and one hour after the ventilators are switched off.

The figures used in the claims are only meant to explain more clearly the intention of the invention and are not supposed to be any restriction concerning the interpretation of the invention.

-1-

CLAIMS

1.   A method of circulating air in rooms employed for storing, drying and/or cultivating products, in which displacement of air can be created in the rooms with the aid of one or more ventilators, characterized in that periodically, within a very short lapse of time, that is to say, within a lapse of time of 4 seconds with the aid of the ventilator(s), at least an amount of air at the least equal to the capacity of the room to be treated is displaced in said room and subsequently no displacement of air is produced in said room for a fairly long time.

2.   A method as claimed in Claim 1, characterized in that ventilators or the like are used for displacing an amount of air corresponding with the amount of air in the room concerned in the empty state for about 2 seconds.

3.   A method as claimed in Claim 1 or 2 characterized in that during ventilation a rate of air flow of about 2 metres/second is produced near the products.

4.   A method as claimed in anyone of the preceding Claims characterized in that for at the most 4 seconds air is continuously displaced in the room with the aid of ventilators.

5.   A method as claimed in anyone of the preceding Claims characterized in that temperature, air refreshment, humidity content and /or $CO_2$ content in the room are maintained at a given level independently of the means causing the air to circulate in the room.

6.      A room specifically intended for using the method claimed in anyone of the preceding Claims characterized in that the room is equipped with air displacing means capable of displacing an amount of air equal to the air contents of the room concerned in the empty state within a lapse of time of about 2 seconds.

7.      A room as claimed in Claim 6 characterized in that it is provided with means for controlling temperature, air refreshment, humidity content and/or $CO_2$ content independently of the air circulating means.

# EUROPEAN SEARCH REPORT

**European Patent Office**

0081867
Application number

EP 82 20 1414

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | LU-A- 81 880 (REINDEER)<br>* Claims 1, 2; page 2, paragraph 3 *<br><br>--- | 1,2,4 | F 24 F 7/007<br>F 24 F 3/00<br>A 01 G 9/24 |
| A | DE-B-1 454 648 (SIEMENS AG)<br>* Column 3, line 42 - column 4, line 33 *<br><br>--- | 6 | |
| A | DE-B-1 949 001 (E. VÖTSCH KÄLTE- UND KLIMATECHNIK AG)<br>* Complete document *<br><br>--- | 5,7 | |
| A | EP-A-0 038 213 (AGRI-PROJECTS INTERNATIONAL)<br>* Complete document *<br><br>----- | 5,7 | |

**TECHNICAL FIELDS SEARCHED (Int. Cl. 3)**

A 01 G 9/00
F 24 F 3/00
F 24 F 7/00

The present search report has been drawn up for all claims

| Place of search | Date of completion of the search | Examiner |
|---|---|---|
| BERLIN | 03-02-1983 | PIEPER C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82